# EUROPÄISCHE PATENTANMELDUNG

(11) **EP 4 234 127 A1**
(43) Veröffentlichungstag der Anmeldung: **30.08.2023**
(21) Anmeldenummer: 22158256.2
(22) Anmeldetag: 23.02.2022
(51) Int. Cl.: B22F 3/10, B22F 3/22, B22F 7/06, B28B 1/24, H01F 1/055, H01F 1/057, H01F 1/08, H01F 7/02, H01F 41/02, H02K 1/02, H02K 15/03, B22F 3/24

(54) **VERFAHREN ZUR HERSTELLUNG EINES MEHRSCHICHTIGEN MAGNETEN**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)
(74) Vertreter: Siemens Patent Attorneys

(57) **Zusammenfassung**

Die Erfindung betrifft ein Verfahren zur Herstellung eines mehrschichtigen Magneten (1), wobei eine erste Schicht (2) eines Grünlings durch Aufbringen von Material mittels Spritzgusses auf eine Grundplatte gebildet wird, wobei das Material magnetisches Material, z. B. NdFeB-Pulver und/oder SmCo-Pulver, und ein Bindemittel, z. B. Kunststoffbinder, aufweist, wobei eine zweite isolierende Schicht (3) des Grünlings durch Aufbringen von weiterem Material mittels Spritzgusses auf und/oder angrenzend an die erste Schicht gebildet wird, wobei das weitere Material ein elektrisch schlecht leitendes Material ist mit einer elektrischen Leitfähigkeit, die zwischen 1·10⁻⁸ und 1·10⁻¹⁴ S/m liegt, und/oder durch Oxidation einer Oberfläche der ersten Schicht gebildet wird und/oder durch Aufbringen des Bindemittels mittels Spritzgusses gebildet wird.

## Beschreibung

Permanenterregte Synchronmaschinen weisen eine Mehrzahl an Permanentmagneten auf. In diesen Magneten werden jedoch durch Magnetfeldänderungen Wirbelströme induziert, womit Verluste einhergehen.

Zur Verringerung von Stromwärmeverlusten werden Magnete in elektrisch isolierte Segmente aufgeteilt, z. B. auseinandergesägt. Diese Segmente werden anschließend wieder zusammengeklebt.

Dies ist jedoch aufwändig und teuer.

Der Erfindung liegt die Aufgabe zugrunde, die Herstellung von Magneten, die elektrisch isolierte Segmente aufweisen, zu verbessern.

Die Lösung der Aufgabe gelingt durch Anspruch 1, d. h. ein Verfahren zur Herstellung eines mehrschichtigen Magneten, wobei eine erste Schicht eines Grünlings durch Aufbringen von Material mittels Spritzgusses auf eine Grundplatte gebildet wird, wobei das Material magnetisches Material und ein Bindemittel aufweist, wobei eine zweite isolierende Schicht des Grünlings durch Aufbringen von weiterem Material mittels Spritzgusses auf und/oder angrenzend an die erste Schicht gebildet wird, wobei das weitere Material ein elektrisch schlecht leitendes Material ist mit einer elektrischen Leitfähigkeit, die zwischen 1·10⁻⁸ und 1·10⁻¹⁴ S/m liegt, und/oder durch Oxidation einer Oberfläche der ersten Schicht gebildet wird und/oder durch Aufbringen des Bindemittels mittels Spritzgusses gebildet wird.

Die Grundplatte dient vorteilhaft als Hilfsmittel während der Herstellung und wird vorzugsweise wieder entfernt.

Vorteilhaft liegt das Material für die erste Schicht als granulares Material, z. B. Pulver, vor. Dieses wird vorteilhaft aufgeschmolzen und aufgespritzt.

Vorteilhaft liegt das weitere Material für die zweite Schicht als granulares Material, z. B. Pulver, vor. Dieses wird vorteilhaft aufgeschmolzen und aufgespritzt.

Das Material für die erste Schicht weist magnetisches Material auf. Besonders vorteilhaft ist hierbei NdFeB-Pulver und/oder SmCo-Pulver.

Hierfür kann Recyclingmaterial in Form von gemahlenen Alt-Magneten eingesetzt werden, was nur einen Energieeinsatz erfordert und nur geringe CO2-Emissionen zur Folge hat. Auch andere Materialien sind denkbar.

Ferner ist im Material ein Bindemittel (auch Binder genannt), z.B. Kunststoffbinder, enthalten.

Vorzugsweise werden mehrere Schichten abwechselnd gebildet. D. h. es wird vorzugsweise die erste Schicht (kann auch als Magnetschicht bezeichnet werden) gebildet und vorzugsweise anschließend wird die zweite Schicht (kann auch Isolationsschicht genannt werden), anschließend wird wieder eine Magnetschicht gebildet und darauffolgend wieder eine Isolationsschicht. Dies wird vorteilhaft so lange wiederholt, bis eine gewünschte Größe des Magneten erreicht ist. Als letzte Schicht wird vorzugsweise eine Magnetschicht gebildet.

Vorteilhaft ist eine Ausführungsform, wonach die erste Schicht mittels Pulverspritzguss gebildet wird.

Pulverspritzguss ist auch unter den Begriff "MIM-Verfahren" (englisch für Metal Injection Moulding) bekannt. Das Pulverspritzgießen weist vorteilhaft folgende, insbesondere aufeinanderfolgende, Prozessschritte auf: Feedstockproduktion, Spritzgießen, Entbindern und Sintern. Der so gefertigte Permanentmagnet kann nachbehandelt werden.

Die Feedstockproduktion gelingt hierbei vorteilhaft durch Mischung eines Metallpulvers, insbesondere Magnetpulvers, mit einem Kunststoff, vorzugsweise einem thermoplastischen Kunststoff. Die Mischung kann als Feedstock bezeichnet werden.

Der Feedstock enthält vorzugsweisenoch andere Stoffe, beispielsweise den bereits erläuterten Binder, z. B. wenigstens einen organischen Binder.

Eine Erwärmung des Feedstocks ist von Vorteil.

Vorteilhaft ist eine Ausführungsform, wonach die zweite isolierende Schicht mittels Mehrkomponentenspritzguss, insbesondere 2K-Spritzguss, gebildet wird.

Es werden vorteilhaft wenigstens zwei Komponenten aufgeschmolzen und, vorzugsweise unter Druck, aufgebracht. Z.B. kann eine Keramik oder Yttriumoxid mit organischen Bindemitteln, wie z. B. Terpineole, verwendet werden.

Vorteilhaft ist eine Ausführung, wonach die Oberfläche der ersten Schicht durch Aufbringen eines Oxidationsmittels, z. B. ein Natriumperoxid und/oder Eisenoxid aufweisendes Oxidationsmittel, oxidiert wird. Auch andere Oxidationsmittel sind denkbar.

Alternativ oder zusätzlich zum Aufbringen des zweiten Materials wird vorteilhaft das Oxidationsmittel aufgebracht, welches zur Oxidation führt.

Vorteilhaft wird erst bei einem Sintervorgang zu einem späteren Zeitpunkt die Oberfläche beeinträchtigt.

Wird beispielsweise eine erste Schicht, welche z. B. NdFeB aufweist, mit Eisenoxid behandelt, lagert sich das Eisenoxid an der ersten Schicht an und/oder es bilden sich an der Oberfläche der ersten Schicht Neodymoxid-Partikel. So kann eine isolierende Schicht erzeugt werden.

Vorteilhaft ist eine Ausführung, wonach das weitere Material Keramik, z. B. Aluminiumoxid, ist.

Besonders bevorzugt sind oxidische Keramiken. Vorteilhaft sind die Oxide Lanthanide, z.B. das kostengünstige Ceroxid.

Es sind auch andere Materialien denkbar, die eine Isolation zweier Magnetschichten zueinander gewährleisten.

Vorteilhaft ist eine Ausführung, wonach der Binder aus dem Grünling ausgetrieben wird zum Erhalt eines Bräunlings, insbesondere mittels Entbinderung.

Bei der Entbinderung wird bei einer thermischen und/oder katalytischen Entbinderung der Binder vom Grünling entfernt.

Vorzugsweise wird der Grünling, also das Spritzgussteil, in einen Entbinderungsofen gesetzt. Nach Ende dieses Vorgangs kann von einem Bräunling gesprochen werden. Im Entbinderungsofen wird vorteilhaft thermisch entbindert. Auf diese Weise zersetzt sich vorteilhaft der Binder.

Vorteilhaft erfolgt anschließend eine Sinterung.

Vorteilhaft ist eine Ausführung, wonach der Bräunling mittels Sinterung verdichtet und ausgehärtet wird.

Die Lösung der Aufgabe gelingt ferner durch einen Magneten, aufweisend eine Mehrzahl an Schichten, wenigstens eine erste Schicht und eine zweite isolierende Schicht, hergestellt nach dem beschriebenen Verfahren.

Vorteilhaft ist eine Ausführungsform des Magneten, wonach die erste Schicht wenigstens 1,5 mm und höchstens 4 mm dick ist.

Eine Magnetschichtdicke liegt vorteilhaft zwischen 1,5 mm und 4 mm. Besonders vorteilhaft für die Magnetschichtdicke sind wenigstens 3 mm und höchstens 3,5 mm. Unterhalb von 3 mm gehen die magnetischen Eigenschaften stark zurück. Es wird hierbei vorteilhaft ein Kompromiss aus möglichst geringen Wirbelstromverlusten im Magneten und vollen magnetischen Eigenschaften eingegangen.

Durch das Verfahren können sehr dünne Magnetschichten, auch Magnetsegmentschichten genannt, erzeugt werden. Die beschriebene Dicke hat den folgenden Vorteil: Es werden im Betrieb sehr nur geringe Wirbelströme im Magneten erzeugt.

Die mittels des Verfahrens beschriebenen erzeugbaren Magnetschichten können deutlich dünner sein, als sie mittels herkömmlicher Verfahren hergestellt werden können.

Vorzugsweise ist die erste Schicht dicker als die zweite isolierende Schicht.

Besonders vorteilhaft ist eine Ausführung, wonach die zweite isolierende Schicht wenigstens 0,01 mm und höchstens 0,1 mm dick ist.

Dadurch wird nur wenig magnetisch aktives Volumen durch magnetisch inaktives Volumen ersetzt.

Die Lösung der Aufgabe gelingt zudem durch eine dynamoelektrische Maschine, insbesondere permanenterregte Synchronmaschine, aufweisend wenigstens einen derartigen Magneten.

Vorzugsweise weist die Maschine eine Mehrzahl an derartigen Magneten auf.

Durch die durch das Verfahren mögliche Segmentierung können auch aufwändige Magnetgeometrien, z. B. Schalenmagnete, segmentiert werden. Beispielsweise können Magnete mit dünnen Rändern (z. B. Brotlaib-Magnete oder randabgesenkte Magnete) gut hergestellt werden.

Das Verfahren ist weniger aufwändig als das bisherige Verfahren.

Der beschriebene Magnet kann im Hochfrequenzbereich eingesetzt werden, z. B. High-Speed-Bearbeitungsmotoren, E-Fahrzeugmotoren und bei Motoren und Generatoren in Flugzeugen.

Im Folgenden wird die Erfindung anhand der in den Figuren dargestellten Ausführungsbeispiele näher beschrieben und erläutert. Es zeigen:
- FIG 1: einen Magneten,
- FIG 2: eine Maschine,
- FIG 3: ein Verfahren zur Herstellung.

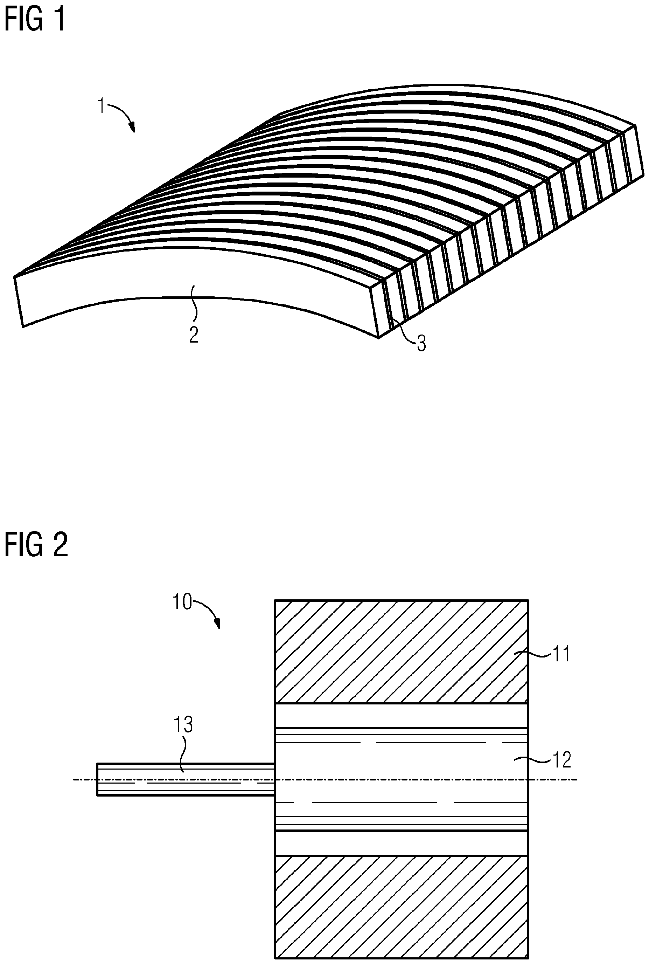

FIG 1 zeigt einen Magneten 1.

Der Magnet weist in der Figur eine Mehrzahl an Schichten auf. Es sind eine erste Schicht 2 und eine zweite isolierende Schicht 2 gezeigt. Die erste Schicht 2 ist vorteilhaft eine Magnetschicht.

Vorteilhaft weist der Magnet mehrere Magnetschichten auf, wobei zwischen zwei Magnetschichten eine isolierende Schicht 3 ausgebildet ist.

FIG2 zeigt eine dynamoelektrische rotatorische Maschine 10.

Diese weist einen Stator 11, einen Rotor 12 sowie eine Welle 13 auf.

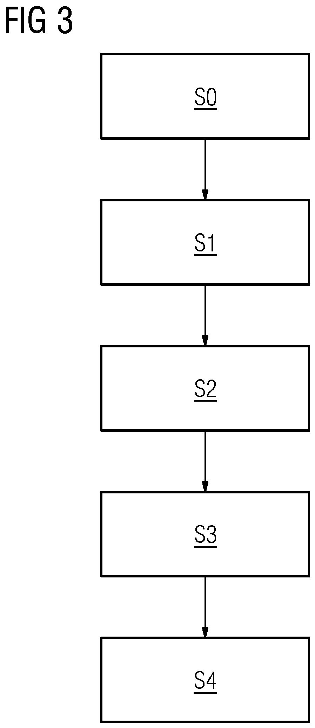

FIG 3 zeigt das Verfahren zur Herstellung.

In einem Verfahrensschritt S0 erfolgt eine Feedstockproduktion. Die Feedstockproduktion gelingt vorteilhaft durch Mischung des Magnetpulvers mit einem Binder. Es können weitere Stoffe enthalten sein. Eine Erwärmung des Feedstocks ist von Vorteil.

In einem Verfahrensschritt S1 erfolgt das Aufbringen des Materials auf eine Grundplatte zur Bildung einer ersten Schicht mittels Spritzgusses, insbesondere mittels Metal Injection Moulding. So wird eine Magnetschicht gebildet.

In einem Verfahrensschritt S2 wird eine zweite isolierende Schicht (auch Isolationsschicht genannt) gebildet, indem weiteres Material mittels Spritzgusses, insbesondere mittels 2K-Spritzgusses, auf und/oder angrenzend an die erste Schicht aufgebracht wird, wobei das Material ein elektrisch schlecht leitendes Material ist.

Alternativ oder zusätzlich kann die zweite isolierende Schicht durch Oxidieren einer Oberfläche der ersten Schicht gebildet werden.

Alternativ oder zusätzlich kann die zweite isolierende Schicht durch Aufbringen des Binders mittels Spritzgusses gebildet werden.

Es kann also lediglich der beschriebene Binder aufgebracht werden oder eine Materialmischung, die überwiegend den Binder aufweist. Bei einem Entbinderungsprozess (siehe Verfahrensschritt S3) und einem, vorzugsweise anschließenden, Sinterprozess entsteht vorteilhaft eine poröse Metallverbindungsschicht, die eine geringe elektrische Leitfähigkeit besitzt. Durch eine vorteilhafte anschließende Infiltration von Klebstoff kann eine hohe mechanische Festigkeit erreicht werden.

Die Verfahrensschritte S1 und S2 werden vorteilhaft so lange wiederholt, bis eine gewünschte Größe des Magneten erreicht ist. Als letzte Schicht wird vorzugsweise eine Magnetschicht gebildet.

Vorzugsweise weist der Magnet eine Mehrzahl an Magnetschichten und eine Mehrzahl an Isolationsschichten auf, die abwechselnd aufeinander folgen.

In einem Verfahrensschritt S3 erfolgt ein Entbindern, also ein Austreiben von Bindemittel.

Das Entbindern erfolgt vorzugsweise bei einer Temperatur von 200°C bis 400°C.

In einem Verfahrensschritt S4 erfolgt ein Sintern.

Das Sintern erfolgt vorzugsweise bei einer Temperatur von 900°C bis 1100°C.

So wird der Magnet 1 gut verfestigt.

Durch das beschriebene Verfahren kann der in FIG 1 dargestellte Magnet 1 hergestellt werden.

In anderen Worten kann die Erfindung auch wie folgt erklärt werden: Die Magnete werden vorteilhaft mittels des MIM-Spritzgussverfahrens, vorteilhaft anisotrop, hergestellt. Ein magnetischer Feedstock weist vorteilhaft recyceltes NdFeB-Pulver auf sowie einen Binder, insbesondere Kunststoffbinder. Der Binder wird vorteilhaft beim thermischen Entbinderungsprozess vollständig aus dem Magnetkörper entfernt. Vorzugsweise werden mehrere Schichten gespritzt. Vorteilhaft werden zwischen den Schichten isolierende Lagen bzw. Isolationsschichten erzeugt. Die isolierenden Lagen werden vorzugsweise durch einen 2K-Spritzguss erzeugt, beispielsweise indem eine dünne Schicht, die im Wesentlichen aus elektrisch schlecht oder auch nicht leitendem Material besteht oder ein derartiges Material aufweist, auf die erste Magnetschicht gespritzt wird. Es werden vorzugsweise abwechselnd Magnet- und Isolationsschichten gespritzt. Ein Isolationsmaterial bzw. ein Material für die Isolationsschicht weist vorzugsweise eine Keramik auf, z.B. Aluminiumoxid. Alternativ oder zusätzlich wird die isolierende Lage erzeugt, indem die Oberfläche der magnetischen Schicht oberflächlich oxidiert wird. Alternativ oder zusätzlich wird lediglich bzw. überwiegend Binder als Zwischenschritt gespritzt. Beim Entbinderungsprozess und vorteilhaft anschließenden Sinterprozess entsteht vorteilhaft eine poröse Metallverbindungsschicht, die eine geringe elektrische Leitfähigkeit besitzt. Durch anschließende Infiltration von Klebstoff kann eine hohe mechanische Festigkeit erreicht werden.

## Patentansprüche

1. Verfahren zur Herstellung eines mehrschichtigen Magneten (1), wobei eine erste Schicht (2) eines Grünlings durch Aufbringen von Material mittels Spritzgusses auf eine Grundplatte gebildet wird, wobei das Material magnetisches Material, z. B. NdFeB-Pulver und/oder SmCo-Pulver, und ein Bindemittel, z. B. Kunststoffbinder, aufweist, wobei eine zweite isolierende Schicht (3) des Grünlings durch Aufbringen von weiterem Material mittels Spritzgusses auf und/oder angrenzend an die erste Schicht gebildet wird, wobei das weitere Material ein elektrisch schlecht leitendes Material ist mit einer elektrischen Leitfähigkeit, die zwischen 1·10⁻⁸ und 1·10⁻¹⁴ S/m liegt, und/oder durch Oxidation einer Oberfläche der ersten Schicht gebildet wird und/oder durch Aufbringen des Bindemittels mittels Spritzgusses gebildet wird.

2. Verfahren nach Anspruch 1, wobei die erste Schicht (2) mittels Pulverspritzguss gebildet wird.

3. Verfahren nach einem der vorhergehenden Ansprüche, wobei die zweite isolierende Schicht (3) mittels Mehrkomponentenspritzguss, insbesondere 2K-Spritzguss, gebildet wird.

4. Verfahren nach einem der vorhergehenden Ansprüche, wobei die Oberfläche der ersten Schicht (2) durch Aufbringen eines Oxidationsmittels, z. B. ein Natriumperoxid und/oder Eisenoxid aufweisendes Oxidationsmittel, oxidiert wird.

5. Verfahren nach einem der vorhergehenden Ansprüche, wobei das weitere Material Keramik, z. B. Aluminiumoxid, ist.

6. Verfahren nach einem der vorhergehenden Ansprüche, wobei das Bindemittel aus dem Grünling ausgetrieben wird zum Erhalt eines Bräunlings, insbesondere mittels Entbinderung.

7. Verfahren nach einem der vorhergehenden Ansprüche, wobei der Bräunling mittels Sinterung verdichtet und ausgehärtet wird.

8. Magnet (1), aufweisend eine Mehrzahl an Schichten (2, 3), wenigstens eine erste Schicht (2) und eine zweite isolierende Schicht (3), hergestellt nach einem Verfahren nach einem der Ansprüche 1 bis 7.

9. Magnet (1) nach Anspruch 8, wobei die erste Schicht (2) wenigstens 1,5 mm und höchstens 4 mm dick ist.

10. Magnet (1) nach einem der Ansprüche 8 bis 9, wobei die erste Schicht (2) dicker als die zweite isolierende Schicht (3) ist.

11. Magnet (1) nach einem der Ansprüche 8 bis 10, wobei die zweite isolierende Schicht (3) wenigstens 0,01 mm und höchstens 0,1 mm dick ist.

12. Dynamoelektrische Maschine (10), insbesondere permanenterregte Synchronmaschine, aufweisend wenigstens einen Magneten (1) nach einem der der Ansprüche 8 bis 11.
